Europäisches Patentamt

European Patent Office

Office européen des brevets

(11) Publication number: **0 139 493**
**B1**

# EUROPEAN PATENT SPECIFICATION

(45) Date of publication of patent specification: 26.10.88

(51) Int. Cl.⁴: **G 02 B 6/42**

(21) Application number: **84306604.4**

(22) Date of filing: **28.09.84**

(54) Fiber optic connector assembly.

(30) Priority: **30.09.83 US 538075**

(43) Date of publication of application:
**02.05.85 Bulletin 85/18**

(45) Publication of the grant of the patent:
**26.10.88 Bulletin 88/43**

(84) Designated Contracting States:
**CH DE FR GB IT LI NL**

(56) References cited:
**EP-A-0 061 772**
**EP-A-0 113 991**
**DE-C-2 913 262**
**GB-A-2 112 170**
**US-A-4 294 512**

**PATENTS ABSTRACTS OF JAPAN, vol.7,
no.253 (P-235)1398r, November 10, 1983; &
JP-A- 58 136 009 (SUMITOMO DENKI KOGYO
K.K.) 12.08.1983**

(73) Proprietor: **MOLEX INCORPORATED
2222 Wellington Court
Lisle Illinois 60532 (US)**

(72) Inventor: **Ponn, Timothy R.
835 Gerten Avenue
Aurora Illinois 60505 (US)**
Inventor: **Dambach, Philip J.
5 S. 401 Glenoban
Naperville Illinois 60540 (US)**

(74) Representative: **Slight, Geoffrey Charles et al
Graham Watt & Co. Riverhead
Sevenoaks Kent TN13 2BN (GB)**

Courier Press, Leamington Spa, England.

## Description

The present invention relates to a fiber optic connector assembly and concerns means for electrically connecting a fiber optic connector assembly to another circuit member.

With the advent of fiber optics technology, one of the major problems which had to be overcome was the proper alignment between an optic fiber and an optoelectronic device. In the absence of proper alignment, the accuracy or amplitude of the transmitted light signal is compromised.

GB—A—2,112,170 describes a fiber optic connector assembly designed to improve the alignment. The fiber optic connector assembly disclosed therein includes an optoelectronic device having a lens and terminal means by which an electrical signal is transmitted between a circuit member and the optoelectronic device. An optic fiber has an end which is in close proximity and alignment with the lens of the optoelectronic device. A housing receives the optoelectronic device and the optic fiber end in a mating relationship. When it is desired to mate or unmate the connector assembly, this is done at the optic or light transmitted interface, i.e. where the fiber end meets with the optoelectronic lens. Every time there is a mating or unmating, the fiber end has to be realigned with the lens. After many cycles, this alignment may not be as accurate as the original mating relationship.

Another problem that is encountered with the mating and unmating of a fiber optic connector assembly at the optic or light transmitting interface is contamination. Every time the fiber end is removed from the lens, there is the possibility that contamination can enter in the lens area and build up over a plurality of cycles.

One means of minimizing this type of contamination is to provide flexible, normally biased closed, trap doors, as described in our European Patent Application Publication No. 0113991, interposed between the optoelectronic device and the outside environment. When the optic fiber end is introduced into the housing, the trap doors are pushed out of the way allowing for the alignment between the fiber end and the optoelectronic device lens.

Nonetheless, even with the trap doors, there is still the possibility of contamination entering through the openings upon mating and unmating of the optic fiber end with the lens. Eventually, this will affect the performance of the system.

It is known, in general, from EP—A—61772 and US—A—4,294,512 to provide mateability for a fiber optic/optoelectronic device at an electrical interface.

The present invention provides a fiber optic connector assembly that is electrically connectable to a circuit member, said fiber optic connector assembly comprising mounting means including means for mounting an optoelectronic device having a lens and terminal means through which an electrical signal is to be conveyed between the circuit member and optoelectronic device, and means for mounting an optic fiber having an end with its end in close proximity and alignment with the lens of the optoelectronic device to provide a mating optic interface, characterised by a plurality of integral metallic contacts for forming a cyclable electrical interface between a plurality of terminal leads extending from an optoelectronic device mounted to the assembly that is selectively and repetitively mateable with a circuit member, said integral metallic contacts each having a first end with a resilient forked end portion adapted for electrical mating with a corresponding terminal lead and a second end having means for selective and repetitive engagement and disengagement with the circuit member and in that said mounting means permanently maintains the mating optic interface when the connector means is electrically mated and unmated.

One way of carrying out the present invention will now be described by way of example, and not by way of limitation, with reference to drawings which illustrate one specific embodiment of the invention.

In the drawings:—

FIG. 1 is a partially exploded, perspective view of a connector assembly of the present invention;

FIG. 2 is a perspective view from the opposite end of the fully assembled fiber optic connector device shown in Fig. 1;

FIG. 3 is a sectional view of the device;

FIG. 4 is an enlarged, partially exploded perspective view of an optic fiber end shown mounting parts of the connector assembly; and

FIG. 5 is an enlarged, fragmentary, sectional perspective view of part of the device shown mounting an optoelectronic device.

Referring now to the drawings, a connector system using the connector assembly 12 of the present invention is illustrated. The connector assembly 12 is in the form of an electric plug suitable for plug-in electrical connection to another circuit member, generally designated 14 in the form of a socket. The system is thus designed such that the plug 12 can be selectively and electrically mated and unmated with the circuit member 14.

The plug 12 shown in the drawings has a body 20 that is adapted to mount two optoelectronic devices 16, each being associated with a corresponding light transmissible optic fiber 18. However, it should be understood that the plug 12 could contain one, or more than two, optoelectronic devices 16 and associated optic fibers 18. The body 20 is divided into two compartments by means of a partition floor 22. Because the arrangement of both compartments are identical, only one will be described, it being understood that the same structure of both compartments will have the same reference numeral.

The optoelectronic device 16 is mounted by movement downwardly perpendicular to the floor 22 into a recess formed by a U-shaped wall 24 of the body. Wall 24 has opposing slots 26 to receive protrusions (not shown) formed on either side of the optoelectronic device 16 to key the optoelec-

-tronic device relative to the body 20 so that the device is positively and predeterminedly located in the body.

The optoelectronic device 16 has a lens 28 (see Fig. 5) surrounded by a generally funnel shaped lead-in or guide portion 30. The lens 28 transmits light to or from electronic means (not shown) which converts light into electricity or electricity into light. A plurality of leads 32 extend from the optoelectronic device 16 through which electricity is transmitted to or from the optoelectronic device 16.

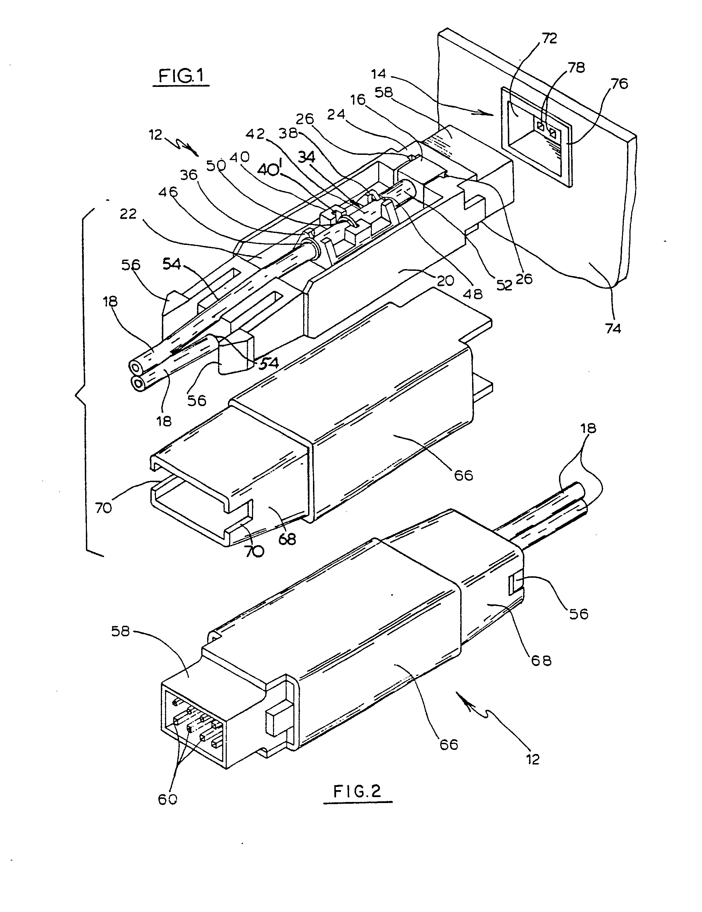

An optic fiber positioning nest 34 is formed on the partition floor 22 for the purpose of holding and aligning the optic fiber 18. Looking at Fig. 1, the nest 34 is seen to generally include two outside yokes 36 and 38 and an intermediate yoke 40.

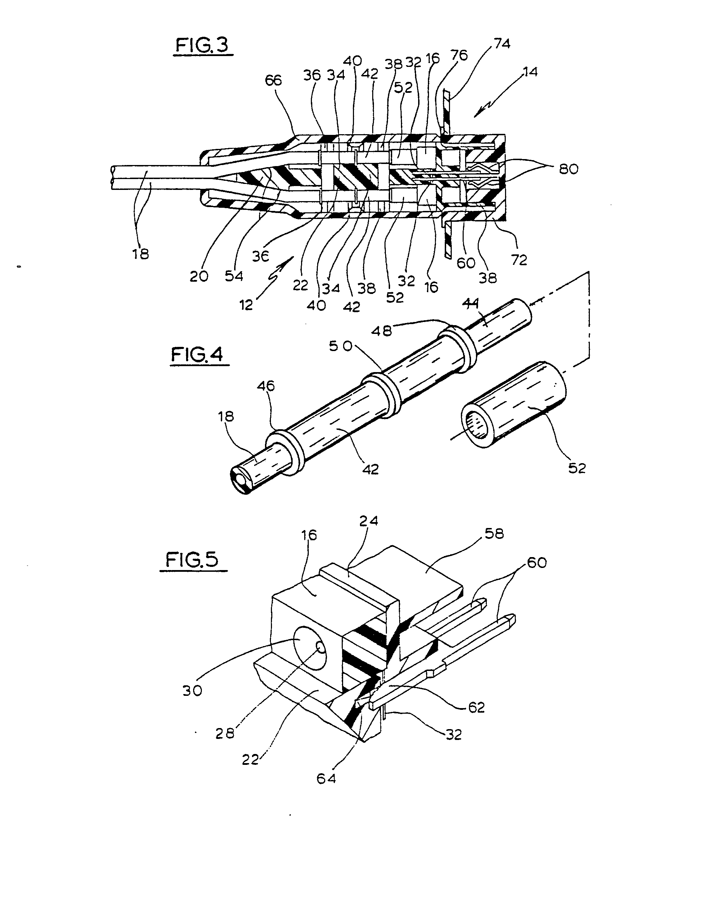

Looking at Fig. 4, a ferrule 42 is crimped near an end 44 of each optic fiber 18. The ferrule 42 has two outer flanges 46 and 48 and one middle flange 50 all of which co-operate with the nest to positively position the fiber end with respect to the body. The middle flange 50 is adapted to be received in a transverse slot 40' in intermediate yoke 40 so as to be positioned in two opposite directions while outer flanges 46 and 48 are adapted to be received at the outside ends of the nest 34 adjacent yokes 46 and 38, respectively so as each to be positioned in respective opposite directions.

In order to seal the interface between the optic fiber end 44 and lens 28, there is provided an open ended, cylindrical elastomeric sealing member 52 as is best shown in Fig. 4. The sealing member 52 is compressibly mounted on the optic fiber 18 between outer flange 48 and the funnel portion 30 surrounding the lens 28 of the optoelectronic device 16.

The optic fibers 18 are received through back end fiber channels 54. The body 20 also includes latching hooks 56 on either side of the fiber channels 54 for reasons which will become more apparent hereinafter.

The front end of the body 20 has a shroud 58 which surrounds a plurality of contacts 60 which are adapted to be selectively mateable with the circuit member 14. Each contact 60 has a forked inner end 62 (Fig. 5) which is adapted to receive a respective optoelectronic device lead 32. In this manner, the contacts 60 are transverse to leads 32 and provide a typical male pin conductor interface with the circuit member 14. In order to ensure that the contacts 60 fully receive their respective leads 32, a clearance slot 64 (Fig. 5) is provided immediately below the optoelectronic device 16.

A cover 66 is adapted to slidingly receive and enclose the body 20. The cover 66 has a rear end portion 68 having notches 70 formed therein to receive latching hooks 56. When the hooks 56 are snap fit into notches 70, the fiber optic connector assembly comprises the completed plug as shown in Fig. 2.

Turning to Figs. 1 and 3, the circuit member 14 in this embodiment is seen to generally include a housing receptacle 72 which is mounted on a panel member 74. The receptacle 72 has a peripheral lip or bezel 76 on the facing side of panel 74. The receptacle 72 has a plurality of openings 78 formed therein for receiving the contacts 60 therethrough for electrical connection to female terminals 80 (Fig. 3) mounted in the receptacle 72. It should be noted that the circuit member 14 described herein is merely exemplary and can take many other forms aside from the one shown here.

The connector system described herein is selectively electrically mateable without interfering with the optical or light transmitting interface between the end 44 of the optic fiber 18 and the lens 28 of the optoelectronic device 16. Instead mateability is accomplished first at the electrical interface between the terminal means (the optoelectronic device leads 32 and contacts 60) of the fiber optic connector plug 12 and cyclably between the contacts 60 and the female terminals 80 of the circuit member 14.

## Claims

1. A fiber optic connector assembly (12) that is electrically connectable to a circuit member (14), said fiber optic connector assembly comprising mounting means (20) including means (24, 26) for mounting an optoelectronic device (16) having a lens (28) and terminal means (32) through which an electrical signal is to be conveyed between the circuit member (14) and optoelectronic device, and means (34) for mounting an optic fiber (18) having an end (44) with its end in close proximity and alignment with the lens (28) of the optoelectronic device to provide a mating optic interface, characterized by a plurality of integral metallic contacts (60, 62) for forming a cyclable electrical interface between a plurality of terminal leads (32) extending from an optoelectronic device mounted to the assembly (12) that is selectively and repetitively mateable with a circuit member (14), said integral metallic contacts each having a first end with a resilient forked end portion adapted for electrical mating with a corresponding terminal lead (32) and a second end having means for selective and repetitive engagement and disengagement with the circuit member (14) and in that said mounting means (20) permanently maintains the mating optic interface when the connector means (60, 62) is electrically mated and unmated.

2. A connector assembly as claimed in claim 1 further including a cover (66) fully enclosing the mounting means and a fiber end and optoelectronic device mounted thereto, said connector means (60, 62) extending out of the cover (66), the connector assembly taking the form of an electric plug (12).

3. A connector assembly as claimed in claim 1 or 2 including a ferrule (42) to be mounted on the optic fiber a predetermined distance from the fiber end, and having an annular flange (50) formed on the outside thereof, said means for mounting the optic fiber comprising an elongated nest (34) for receiving the ferrule, said nest having a transverse slot (40') for receiving the annular flange (50) and positioning the end of the optic fiber relative to the lens of an optoelectronic device mounted to the mounting means therefor, the mounting means (24, 26) for mounting the optoelectronic device being adapted positively to position the device relative to said slot (40').

4. A connector assembly as claimed in claim 3, wherein the mounting means (24, 26) for the optoelectronic device is arranged to receive the optoelectronic device in a direction normal to the direction of elongation of said nest (34).

5. A connector assembly as claimed in claim 3 or 4 including an elastomeric sealing member (52) to be received on the optic fiber to be compressed between a further flange (48) of said ferrule and the housing of an optoelectronic device mounted to the mounting means therefor in a peripheral area (30) surrounding the lens of the device.

## Patentansprüche

1. Lichtleiterverbinder (12), der mit einem Stromkreisteil (14) elektrisch verbindbar ist und eine Halteeinrichtung (20) mit einer Einrichtung (24, 26) zum Anbringen eines optoelektronischen Teils (16) mit einer Linse (28) und einem Anschluß (32), durch den ein elektrisches Signal zwischen dem Stromkreisteil (14) und dem optoelektronischen Teil zu übertragen ist, sowie eine Einrichtung (34) zum Anbringen eines Lichtleiters (18) mit einem Ende (44) umfaßt, dessen Ende zur Herstellung einer zusammengeführten optischen Verbindungsstelle der Linse (28) eng benachbart und mit dieser fluchtend ausgerichtet ist, gekennzeichnet durch eine Anzahl einstückiger metallischer Kontakte (60, 62) zum Bilden einer wiederholbaren elektrischen Verbindungsstelle zwischen einer Anzahl von dem mit dem Verbinder verbundenen optoelektronischen Teil ausgehender Anschlußleiter (32), die wahlweise und wiederholbar mit einem Stromkreisteil (14) verbindbar ist, wobei die einstückigen metallischen Kontakte jeweils ein erstes Ende mit einem federnden gegabelten Endbereich für eine elektrische Verbindung mit einem entsprechenden Anschlußleiter (32) und ein zweites Ende mit einer Einrichtung für eine wahlweise und wiederholte Verbindung mit dem Stromkreisteil (14) und eine Verbindungslösung von diesem aufweisen, und ferner dadurch gekennzeichnet, daß die Halteeinrichtung (20) die zusammengeführte optische Verbindungsstelle dauernd beibehält, wenn die Verbindereinrichtung (60, 62) elektrisch zusammengeführt und gelöst wird.

2. Verbinder nach Anspruch 1, mit einer die Halteeinrichtung sowie ein Lichtleiterende und ein optoelektronisches Teil, die mit dieser verbunden sind, vollständig umschließenden Umhüllung (66), wobei sich die Verbindereinrichtung (60, 62) aus der Umhüllung (66) herausstreckt und der Verbinder die Form eines elektrischen Steckers (12) hat.

3. Verbinder nach Anspruch 1 oder 2, mit einer auf dem Lichtleiter in einem vorbestimmten Abstand vom Leiterende anzubringenden Kapsel (42) mit einem auf ihrer Außenseite gebildeten Ringflansch (50), wobei die Einrichtung zum Halten des Lichtleiters ein längliches Lager (34) zur Aufnahme der Kapsel umfaßt, das Lager einen Querschlitz (40') zur Aufnahme des Ringflansches (50) und zur Positionierung des Endes des Lichtleiters in bezug auf die Linse eines in der für dieses vorgesehenen Halteeinrichtung angebrachten optoelektronischen Teils aufweist und das optoelektronische Teil mittels der Anbringungseinrichtung (24, 26) zum Anbringen des optoelektronischen Teils zwangsläufig in bezug auf den Schlitz (40') positionierbar ist.

4. Verbinder nach Anspruch 3, bei dem die Anbringungseinrichtung (24, 26) für das optoelektronische Teil für eine Aufnahme des optoelektronischen Teils in einer zur Richtung der Längserstreckung des Lagers (34) senkrechten Richtung ausgeführt ist.

5. Verbinder nach Anspruch 3 oder 4, mit einem auf dem Lichtleiter aufzunehmenden elastomeren Dichtungsglied (52), das zwischen einem weiteren Flansch (48) der Kapsel und dem Gehäuse eines mit der für dieses vorgesehenen Halteeinrichtung verbundenen optoelektronischen Teils in einem die Linse des Teils umgebenden Umfangsbereich (30) zu komprimieren ist.

## Revendications

1. Connecteur de fibre optique (12) pouvant etre raccordé électriquement à un élément de circuit (14), ce connecteur de fibre optique comprenant des moyens de montage (20) comportant des moyens (24, 26) pour monter un dispositif optoélectronique (16) comportant une lentille (28) et des bornes (32) à travers lesquelles un signal électrique doit être transmis entre l'élément de circuit (14) et le dispositif optoélectronique et des moyens (34) pour monter une fibre optique (18) ayant une extrémité (44), de telle façon que son extrémité soit située à proximité immédiate de la lentille (28) du dispositif optoélectronique, et à l'alignement avec celle ci afin de constituer une interface optique de couplage, caractérisée par une pluralité de contacts métalliques d'une seule pièce (60 62) pour former une interface électrique périodique entre une pluralité de conducteurs de bornes (32) s'étendant à partir d'un dispositif optoélectronique monté sur le connecteur (12) et qui peut etre couplé sélectivement et d'une manière répétée avec un élément de circuit (14), ces contacts métalliques d'une seule pièce comportant chacun une première extrémité avec une portion extrême élastique en forme de fourche, adaptée pour être raccordée électriquement avec un conducteur de borne correspondant (32) et une seconde extrémité comportant des moyens permettant un engagement et un dégagement sélectifs et répétitifs avec l'élément de circuit (14), et en ce que les moyens de montage (20) maintiennent en permanence l'interface optique de couplage lorsque les moyens de connexion (60 62) sont couplés et découplés électriquement.

2. Connecteur de fibre optique suivant la revendication 1 caractérisé en ce qu'il comporte en outre un couvercle (66) enfermant totalement les moyens de montage et une extrémité de fibre et un dispositif optoélectronique monté sur ceux ci, les moyens de connexion (60, 62) s'étendant à l'extérieur du couvercle (66), le connecteur étant réalisé sous la forme d'une fiche électrique embrochable (12).

3. Connecteur de fibre optique suivant l'une quelconque des revendications 1 ou 2 caractérisé en ce qu'il comporte un manchon (42) destiné à etre monté sur la fibre optique à une distance prédéterminée de l'extrémité de cette fibre, ce manchon comportant une bride annulaire (50) formée sur sa surface externe les moyens de montage de la fibre optique comprennent un berceau allongé (34) pour recevoir le manchon, ce berceau comportant une fente transversale (40') pour recevoir la bride annulaire (50) et mettre en position l'extrémité de la fibre optique par rapport à la lentille du dispositif optoélectronique monté sur les moyens de montage de celui-ci, les moyens de montage (24, 26) pour le montage du dispositif optoélectronique étant adaptés de manière à mettre en position d'une manière positive le dispositif par rapport à la fente (40').

4. Connecteur de fibre optique suivant la revendication 3 caractérisé en ce que les moyens de montage (24, 26) pour le dispositif optoélectronique sont disposés de manière à recevoir le dispositif optoélectronique dans une direction perpendiculaire à la direction de l'allonge ment du berceau (34).

5. Connecteur de fibre optique suivant l'une quelconque des revendications 3 ou 4 caractérisé en ce qu'il comporte un organe d'étanchéité (52) en élastomère destiné à être placé sur la fibre optique pour être comprimé entre une autre bride (48) du manchon et le boîtier du dispositif optoélectronique monté sur les moyens de montage de celui ci dans une zone périphérique (30) entourant la lentille du dispositif.

FIG.1

FIG.2

FIG.3

FIG.4

FIG.5